# EUROPEAN PATENT SPECIFICATION

(11) **EP 2 993 975 B1**
(45) Date of publication and mention of the grant of the patent: **13.06.2018**
(21) Application number: 14724143.4
(22) Date of filing: 09.05.2014
(51) Int. Cl.: A01K 15/02

(54) **CANINE ODOUR DETECTION TRAINING TOOL**
WERKZEUG FÜR DUFTERKENNUNGSTRAINING VON HUNDEN
OUTIL D'APPRENTISSAGE CANIN DE DÉTECTION D'ODEUR

(30) Priority: 09.05.2013 GB 201308364
(43) Date of publication of application: 16.03.2016
(73) Proprietor: Noel, Earl Trevor, Bromley, Kent BR2 8NN (GB)
(72) Inventor: Noel, Earl Trevor, Bromley, Kent BR2 8NN (GB)
(74) Representative: Adamson Jones
(86) International application number: PCT/GB2014/051415
(87) International publication number: WO 2014/181118

(56) References cited:
- WO-A2-2011/088274
- CN-U- 202 565 946
- DE-U1-202008 000 033
- DE-U1-202010 003 635
- JP-A- 2002 125 503
- US-A- 5 456 036
- US-A1- 2009 031 608

## Description

The present invention relates to the field of canine training, and in particular to the field of canine odour detection.

Due to their extremely strong sense of smell, dogs are trained to discern individual scents, and thereby detect individual substances. Examples of such substances may include illegal drugs, explosives, firearms, or blood. As such so called "sniffer" dogs are commonly used in both the police force and the army as well as by other security service providers. In order for sniffer dogs to be effective it is necessary that they are well trained for a wide variety of different scenarios, and many dog trainers wish to make use of training tools to ensure that this is the case.

Traditional methods for training such dogs involve placing a sample of the substance that is desired to be detected in a hidden location, and then releasing the dog so that they are able to find the sample. It has, however, been found by the inventor that there are associated problems with such a training routine.

In particular, when the sample substance is in transit it is difficult to mask the scent of the sample from the dog, and as such the dog is aware that a trainer is carrying a scent before it can be adequately hidden and so the dog is easily able to tell where the sample has been placed. Training tools are typically of an ad-hoc nature and simply consist of a housing in which several orifices have been drilled, such that the odour of the substance is permanently allowed to escape, and therefore afford the dog the opportunity to track the placement of the tool. This may make the training exercise redundant, and may provide false information regarding the effectiveness of the training and/or the ability of the dog.

Furthermore it is highly desirable to be able to locate the sample in a variety of locations, of differing accessibilities, such that the difficulty of the training activity can be increased or decreased as required. Often the sample is simply placed on a suitably flat (e.g. horizontal) surface in a desired location, and, as such, is not adequately secured. Having to place the sample in this manner also restricts the number of locations in which the sample can be effectively placed. Thus training exercises often do not provide a sufficient challenge for a dog. It is important that the dog is challenged and rewarded as part of a training process to stimulate interest and a desire to find whatever substance or medium he has been trained to find.

It is an aim of the present invention to provide a dedicated canine training tool or device which can provide for more effective dog training.

JP 2002 125503 discloses a capsule that is small in size and light in weight and facilitated in custody management and use and is a tool for training disaster relief dogs in order to memorize the odours of living bodies and dead bodies to be searched in the disaster sites.

WO 2011/088274 discloses a scent dispersal device which includes a reservoir usable to hold a scented material that emits a desired scent. A rate-controllable valve regulates a fluid connection between the reservoir and the external environment. The rate-controllable valve may be adjustable to alter the flow rate of the scent substance from the reservoir to the external environment.

US 2009/031608 relates to a temperature regulated, pressure activated liquid scent dispenser. The pressure in the interior of the container may increase as ambient temperature increases. A release structure of the container may release a portion of the liquid scent once a threshold pressure or threshold amount of pressure build-up is reached in the interior of the container.

US 5 456 036 discloses an animal scent dispensing pistol assembly for dispensing scent for attracting animals comprising a pistol including a barrel having a sealed base end, an opened tip end, and a bored intermediate portion therebetween; a handle extended from the barrel; a plunger slidably disposed within the barrel; a spring mechanism disposed within the barrel and coupled to the pistol for urging the plunger towards the tip end of the barrel; a cocking mechanism coupled to the plunger and adapted to be actuated for urging the plunger towards the base end of the barrel to define a retracted orientation; and a trigger mechanism coupled to the pistol and extended therefrom with the trigger mechanism having a rest position for holding the plunger in the retracted orientation and a firing position actuatable for releasing the plunger from the retracted orientation; and a plurality of scent sticks each adapted for holding liquid scent, each scent stick further adapted to be inserted into the barrel of the pistol for subsequent ejection therefrom.

According to a first aspect of the invention there is provided a canine odour detection training tool as defined in the appended claim 1. Further optional features are recited in the associated dependent claims. The tool comprises a housing having an internal cavity adapted to hold a sample substance; at least one opening in said housing; and at least one releasable closure which selectively prevents odours from being emitted from the at least one opening.

The closure is actuable between a closed condition in which odour is substantially prevented from escaping from the interior of the housing and an open condition, in which, the opening is exposed.
The housing is formed of a plurality of sections. First and second opposing sections may be used. The first and second sections may be joined together at an interface of a dimension that is greater than the corresponding dimension of the opening. The dimension may be a lateral or cross-sectional dimension, such as a width or diameter or area. This feature is particularly useful as it allows a scent-emitting substance to be placed in the housing such that the first and second sections can be closed about the substance to trap it therein, even when the closure is opened.

Each section may be generally concave in form and may have a peripheral edge. The peripheral edge may surround an open side or end of the housing section. An overlap or interference between the first and second opposing sections may be formed so as to seal the interior of the housing in a gas/odour tight manner.

The plurality of sections are releasably attached together. The plurality of sections may be provided with a threaded formation, such that they may be screwed together. The plurality of sections may alternatively be assembled via a push or friction fit.

The plurality of sections may fit together tightly such that substantially no odour is allowed to escape from the housing. This provides the advantage of concealing the odour of the sample substance until it is allowed to be released for the purpose of training. In one example a seal, such as a ring seal may be located between the opposing housing sections.

The housing may be formed of a plastics material. The plastic material may be a resilient material. The plastic material may be provided with an odour proof barrier, for example on an internal surface thereof. Alternatively, the housing may be formed of a glass or a ceramic material.

The housing, or at least a main portion thereof, may be substantially cylindrical in nature. The at least one opening may be provided in an end face of the housing.

The internal cavity of the housing may be adapted such that a substance can be held within the internal cavity. The internal cavity may be provided with one or more additional support structures which allow the substance to be securely held in place. The support structures may provide additional strength to the housing.

The at least one opening in the housing may be of a form that allows odours to escape, yet prevents the substance from escaping the internal cavity. This may be beneficial in that it may prevent the substance from being ingested by a canine that is being trained. The opening may comprise one or more members spanning the opening. The member(s) may comprise a guard member. The opening may comprise a valve, such as a one way valve. The opening may comprise a sample retaining arrangement.

The at least one opening may additionally or alternatively be provided with a breathable fabric.

The closure takes the form of a quick release cap or catch. A cap may fit closely about a neck portion of the housing so as to form a substantially gas tight seal therewith. The cap is connected to the housing by a flexible adjoining member which may comprise an arm, hinge or strand of material. The adjoining member may be connected to the housing by a collar, for example arranged about a neck portion of the housing.

The closure may take the form of a flippable cap. The flippable cap may be formed of a plastic material. The cap may be provided with an odour proof barrier, for example on an inner surface thereof. The flippable cap may alternatively be formed of a glass or ceramics material.

The closure may take the form of a screw thread cap. The closure may take the form of a twistable end cap with one or more openings therein (for example in its end face) which can be selectively aligned to correspond with the at least one opening.

The housing may be provided with means for being releasably attachable to a surface. Such means may take the form of, but are not limited to, a magnet, a clip, or an adhesive material. This has the benefit of allowing the housing to be securely yet releasably attached to a variety of types of surfaces. This can greatly increase the locations in which the housing can be hidden. Furthermore the housing can be temporarily affixed to a variety of surfaces at different orientations such as on walls, behind radiators, on fixture and fittings, beneath cars or the like.

The housing may have one or more substantially flat or planar outer surface. That surface may be provided with releasable attachment means. A magnet may be attached to said surface.

A flat surface of the housing may be spaced from a further portion of the housing comprising the opening by an intermediate wall. Opposing housing portions may be joined at the intermediate wall.

The flat surface may be generally circular in plan. The housing may have a width or diameter of 10 cm or less and typically 6 cm or 5 cm or less. The housing may be generally cylindrical.

Also described is a canine odour detection training tool, the tool comprising; a housing having an internal cavity adapted to hold a sample substance and at least one opening, wherein the housing comprises releasable attachment means for selective attachment of the housing to a support surface in use.

The attachment means may comprise a magnet, which may be mounted within the housing. The magnet may be mounted on the interior of a flat outer wall of the housing. The magnet may be mounted within a first internal cavity portion. A second internal cavity portion may be arranged to receive a sample. An internal dividing wall may separate the first and second cavity portions.

The invention also provides a canine odour detection training kit as defined in the appended claim 11. The kit comprises a plurality of canine odour detection training tools, wherein each tool may be provided with a different sample substance, and a storage case having a plurality of individually sealable chambers for each of the tools.

Such a kit has the benefit of preventing cross contamination between different types of sample substance, and further allows for the provision of a complete set of training tools, so as to facilitate the training of a so called "sniffer" dog.

The kit may alternatively comprise a plurality of canine odour detection training tools, wherein each tool is provided with the same substance. Each tool may pertain to a different level or strength of odour.

The carrying and/or storage case may be provided with one or more internal formation defining a depression or recess for supporting a tool. The case may comprise an internal filler or support material, such as a padded and/or foam interior. Such an interior provides protection for the plurality of training tools. The carrying and/or storage case may be provided with a plurality of internal compartments or depressions. The carrying and/or storage case may be provided with a weatherproof exterior. The carrying and/or storage case may be provided with a handle or strap. The carrying and/or storage case may comprise a removable or hinged lid. The carrying and/or storage case may be a box.

Each compartment may conform substantially to the shape of a canine odour detection training tool according to the first aspect of the invention. Each compartment may comprise, or be provided with, an individually sealable receptacle or container. Each individually sealed container may be provided with a canine odour detection tool according to the first aspect of the invention.

The individually sealed containers may be formed of plastic. The individually sealed containers may be formed of glass or a ceramic material. The individually sealed containers may be provided with a hermetic seal. Glass vials, jars or the like may be provided and may have sealable closures. The containers may fit snugly within internal depressions in the case. Alternatively, an internal structure of the case may itself provide the sealable closures.

Practicable embodiments of the invention are described in further detail by way of example only with reference to the accompanying drawings, of which:
Figure 1 shows a first embodiment of a canine odour detection training tool according to a first aspect of the invention;
Figure 2 shows a second embodiment of a canine odour detection training tool according to a first aspect of the invention;
Figure 3 shows a third embodiment of a canine odour detection training tool according to a first aspect of the invention; and,
Figure 4 shows a canine odour detection training kit according to a second aspect of the invention.

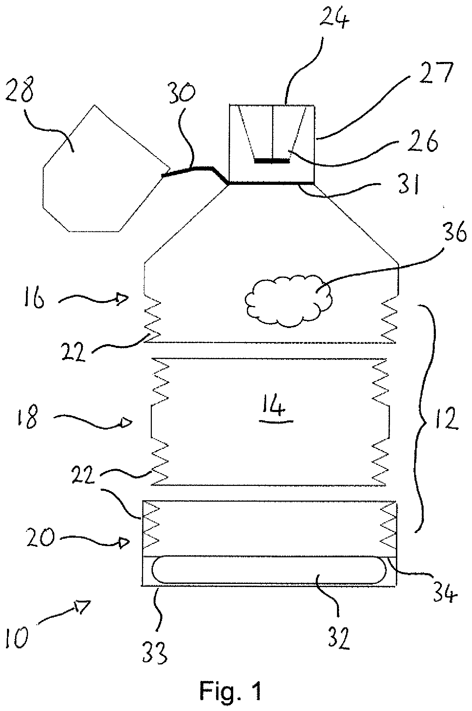

Referring firstly to Figure 1, there is shown a canine odour detection training tool 10. The tool 10 comprises a housing 12, typically formed of a plastic material. Depending on the plastic material selection, a plastic housing may provide an adequate odour barrier in use. However if an improved odour barrier is required, for example for storing samples over a long period of time in the housing, an odour-impervious barrier material, such as a coating or liner material may be provided on the interior surface of the housing. Such a barrier could be provided by an in-moulding process or by application of a coating after the housing has been formed. A plastic material is in many ways preferred due to it providing a minimal bite hazard to a dog. However the housing could be formed of a glass or ceramic material in other embodiments if the odour barrier properties thereof are desirous.

The housing 12 is formed of an upper section 16, a middle section 18, and a lower section 20. Those sections are generally circular in plan so as to form a generally cylindrical housing 12 in use. Each of the upper 16, middle 18, and lower 20 sections is provided with attachment means for securing the sections together in use, which, in this example takes the form of a screw thread 22. Whilst the sections 16, 18, 20 are referred to in height order as shown in Figure 1, it will be appreciated that the housing may be inverted or otherwise differently oriented and, as such, the sections should be construed accordingly.

Each section has an internal void or cavity 14 arranged such that, when the sections are brought together, the internal cavities are aligned or adjoined so as to form a common internal cavity 14 for the housing 12.

The upper section 16 of the housing 12 is provided with an opening 24. The opening 24 is provided with a sample retaining arrangement 26. The sample retaining arrangement is intended to allow a solid or liquid sample of material to be inserted into the housing but to impede escape of the material via opening 24. The sample retaining arrangement 26 comprises a restriction adjacent opening 24. The sample retaining arrangement 26 in this example comprises a valve-like structure, e.g. serving as a one-way valve, such as, for example a duck-bill type valve or other deformable valve member. However, whist the valve prevents escape of solid/liquid sample material from the interior of the housing, it is to be noted that the valve is not gas tight, such that odour can escape through the valve. In another example, the retaining arrangement 26 may comprise one or more members extending across the opening 24 so as to present relatively small openings or perforations, through which a sample of larger size cannot pass. In one such example a breathable membrane may be arranged over the opening. The opening 24 is provided in a neck formation 27. The neck 27 is of reduced width relative to the remainder of the internal cavity 14 in a manner akin to a neck of a bottle. The neck formation 27 may take the form of an upstanding peripheral wall depending from the housing section 16 and surrounding the opening.

A cap 28 is provided as a closure for opening 24. The cap 28 is typically concave in form and may be formed of a plastic material. The cap 28 is connected to the upper section 16 of the housing 12 by an adjoining arm 30, which may take the form of a flexible plastic strip that may deform in a hinge-like manner in use. A collar 31 may be provided about the neck 27, from which the arm 30 may depend.

The arm 30 thus connects the cap 28 to the collar, all of which may be formed of the same material, e.g. as an integral component. The cap 28 may thus comprise a living or integral hinge. In other examples, the cap may be otherwise hinged or flippable such that the cap is retained on the housing when open.

The collar 31 may be arranged to provide an interference or friction fit with the neck 27. Those features may comprise cooperating engagement formations such that the collar is retained on the neck.

In one example, the cap may comprise a seal member or portion for engagement with the housing 16 and/or neck 27. The seal member may be provided on an internal surface of the cap or at its peripheral edge. The seal member may comprise one or more lip formation or ring seal extending around the internal surface or circumference of the cap 28. The seal may be deformable, e.g. resiliently or reversibly deformable and may comprise a thin-walled flange or elastic/elastomeric material. The seal member may be integral with the cap. In another embodiment a seal member may be additionally or alternatively provided on the neck 27.

The lower section 20 of the housing 12 is provided with a magnet 32, for example in a base portion 33 thereof. The magnet may be embedded in the base, or attached thereto, for example by adhesive or similar. In the example shown, an internal wall 34 defines a further cavity portion in the base in which the magnet is received, thereby separating the magnet from the main internal cavity 14. In other embodiments, a partial wall, baffle or bracket could be used to maintain the magnet in place.

For use, the middle section 18 of the housing 12 is screwed onto the lower section 20 of the housing 12, and the upper section 16 of the housing 12 is further screwed onto the combined middle section 18 and lower section 20 of the housing 12, such that the middle housing is intermediate the upper and lower housings. Prior to attaching either the upper section 16 or middle section 18, a sample substance 36 may be placed inside the internal cavity 14 of the housing 12. In other examples, in which a suitable valve-like structure is provided at 26, the sample may be inserted into the housing after it has been assembled.

The nature of the screw thread 22 allows the sections 16,18,20 of the housing 12 to be tightly assembled together such that a substantially airtight housing 12 is formed about the inner cavity 14. In other embodiments, a different connection may be formed between the housing sections, for example by way of a push-fit or latching arrangement. A seal member, such as a sealing ring, may be disposed between the sections in any embodiment if necessary.

In order to prevent the odour of the sample substance 36 from escaping from within the internal cavity 14 of the housing 12, the plastic cap 28 is moved such that it covers the opening 24. The cap 28 fits tightly over the opening 24 so as to provide a substantially gas-proof barrier. A seal, e.g. a sealing ring, (not shown) may be provided on either or both of the cap or neck 27 to improve the seal therebetween. The cap 28 is further secured to the upper section 16 of the housing 12 via the plastic arm 30. Such a formation allows the cap 28 to be easily and quickly removed from the opening 24, for example using only one hand, and returned thereto without the cap becoming lost.

With the cap positioned over the opening 24, the tool 10 is now in a sealed state, and, as such, may be placed at the desired location by a dog trainer. The magnet 32 allows the tool 10 to be attached to a wide variety of surfaces and at a variety of orientations and or different heights, for example against cars, behind radiators as well other fixtures and fittings. Furthermore, the size of the housing, which is typically less that 8cm in width and/or height, may be hidden in small gaps and the like to provide a challenge to a dog being trained. In the present embodiment, the housing is approximately 4-6 cm in height and/or width.

When the tool 10 is safely secured at the desired location, the cap 28 may be removed from its covering position such that the odour of the sample substance 34 is allowed to secrete from the tool. The dog may then be released and allowed to attempt to find the tool 10.

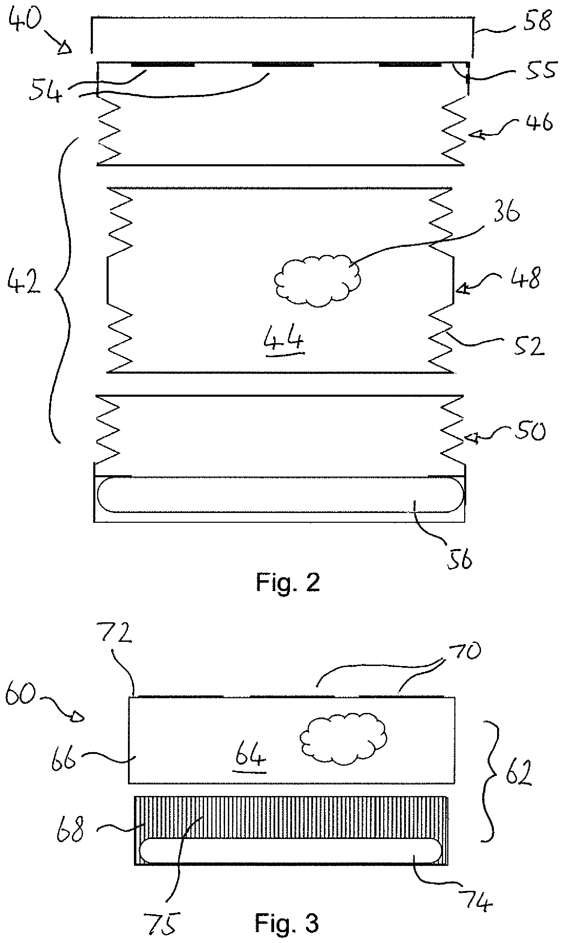

Referring to Figure 2, there is shown a canine odour detection training tool 40 according to another embodiment. The housing 42 comprises an internal cavity 44 and is formed of an upper section 46, a middle section 48, and a lower section 50, of which the middle and lower sections 48, 50 are akin to the corresponding sections 18, 20 disclosed in relation to Figure 1 and have corresponding threaded connector formations 52. Like features will not be described again for completeness. However the upper section 46 differs to that of Figure 1.

The upper section 46 of the housing 42 is provided with a plurality of openings 54 at an end 55 of the housing 42. The openings 54 are smaller than the width/diameter of the housing and the sample intended to be inserted therein. The openings may have a breathable textile material thereover to prevent escape of the sample 36, or fragments thereof. Three or four or more openings 54 may be provided. Unlike the example of Figure 1, the tool 40 of Figure 2 has openings that are always open. However the example of Figure 2, may be provided with a closure of cap formation 58 to selectively cover the openings 54 as desired. In one example the cover 58 is a twistable cap member with openings arranged to be selectively aligned or offset from openings 54 by twisting the cap. The degree of overlap of the openings 54 may allow control of the degree to which the scent is released in use. Alternatively, the cap 58 may be a flip-type cap to expose or cover the end 55 of the housing 42 as desired.

When in use the tool is assembled and a sample substance 36 is placed within the housing 42 as described above.

Referring to Figure 3, there is shown a further embodiment of the invention comprising a canine odour detection training tool 60. The tool comprises a housing 62 having an internal cavity 64. The housing 62 is formed of an upper section 66 and a lower section 68. The upper section 66 and the lower section 68 of the housing 62 are substantially cylindrical in nature. The upper section 66 of the housing 62 has a slightly larger diameter than the lower section 68 of the housing 62.

The upper section 66 of the housing 62 is provided with a plurality of openings 70 on an end face 72 of the housing 62. The lower section 68 of the housing 62 is provided with a magnet 74. The lower section 68 of the housing 62 is provided with slight vertical indentations or grooves 75 around its periphery.

When in use a sample substance is placed within the lower section 68 of the housing 62. The upper section 66 of the housing 62 is pushed down onto the lower section 68 of the housing 62, such that a friction fit is formed between the two sections 66,68. The difference in diameters between the two sections 66,68 is such that the friction fit approximates an airtight seal. A seal member may additionally be provided between an upper edge of the lower housing section 68 and the internal surface of the end wall 72 of the upper housing section 66 if necessary. The vertical indentations 75 present on the lower section 68 of the housing 62 facilitate the assembly of the housing 62 with a tight fit, such that, once assembled, the housing cannot readily be disassembled without breaking the housing.

A cap of the type 58 shown in Figure 2 may also be provided for the embodiment of Figure 3.

The embodiment of Figures 2 and 3 provide a low form factor so as to allow further options for locating the device in use. For example, the height of the housing 62 in Figure 3, may be 2 or 3 cm or less. The height of the housing in Figure 2 is typically 4 or 5 cm or less.

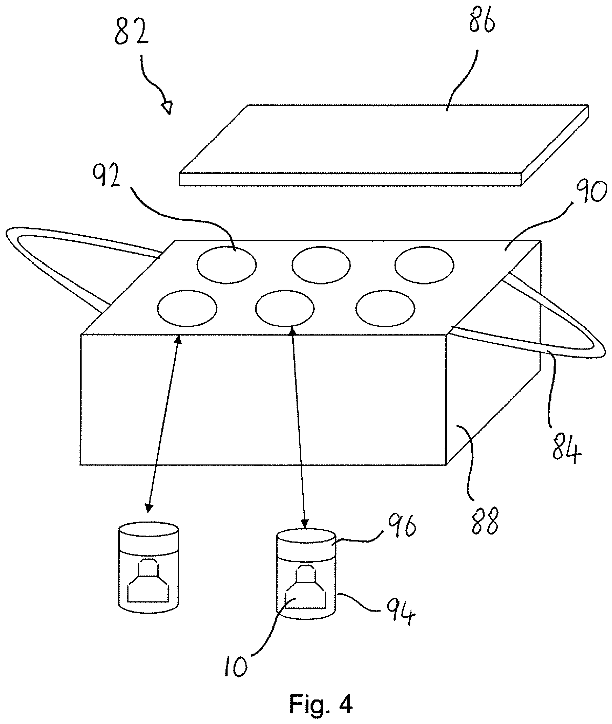

Referring to Figure 4, there is shown a canine odour detection kit 80. The kit comprises an enclosure in the form of box 82 which acts as a carrying and/or storage case. The box 82 comprises handles/straps 84. The box 82 comprises an openable lid 86. The box 82 is provided with an external wall or liner 88 around its exterior faces, which may be generally weatherproof. The interior of the box 82 is provided with a foam insert or padding 90.

The box 82 and/or the foam insert or padding 90 is shaped to define a plurality of internal compartments 92. Each internal compartment 92 is substantially cylindrically shaped.

Each internal compartment 92 is shaped to receive a glass container 94 which has a sealable lid or stopper 96 such that the interior of the container is air tight. The containers 94 are preferably a close fit within compartments 92. In a different embodiment, the containers 94 may be integral with the case insert 90, for example by forming the case insert 90 of a more rigid (i.e. non-foam) material and providing closures for the individual compartments 92.

When in use each glass container 94 is provided with a canine odour detection training tool 10. Each canine odour detection training tool 10 preferably comprises a different sample substance 34. Each glass container 94 is individually sealed with the tool therein, and the seal is most preferably a hermetic seal. Such a seal prevents cross contamination between the different sample substances 34 contained within each canine odour detection training tool 10. Each sealed glass container 94 may then be placed within an internal compartment 92 of the box 82. The box 82 thereby allows a plurality of canine odour detection training tools 10 to be transported with ease as a single canine odour detection training kit 80. This is beneficial in that it allows a dog trainer to undertake sniffer dog training without notice and, in particular, without the need to prepare samples and fill training tools which can allow a dog to detect the relevant odours prior to the training task.

In any embodiment, the tool(s) may be prefilled with a sample. The sample preferably comprises a permeable or porous solid material. The sample may comprise a textile, foam or other porous material to which an odour emitting substance (e.g. liquid) has been applied. In other examples, the sample material may comprise a solid body infused with an odour-emitting material, e.g. upon manufacture thereof.

The magnet of the tool is in many ways a preferred embodiment of the invention but may be replaced with other attachment means such as a sucker or an adhesive member on its outer surface. A reusable and/or replaceable adhesive pad or strip may be used to this end, although the operational life of such adhesive strips is typically limited. Accordingly, replacement adhesive pads may be provided with the tool and/or kit as necessary.

## Claims

1. A canine odour detection training tool (10), the tool (10) comprising:
a housing (12) having an internal cavity (14) adapted to hold an odour-emitting sample substance (36) and at least one opening (24); and
at least one releasable closure (28) which selectively prevents odours from being emitted from the at least one opening (24),
wherein the housing (12) comprises a plurality of housing sections (16, 18, 20) arranged such that the odour-emitting sample (36) is trapped therebetween in use, the plurality of housing sections (16, 18, 20) are releasably attached together, and the closure (28) is a quick-release cap, **characterised in that** the tool (10) comprises a restriction (26) adjacent the opening (24) to prevent escape of solid/liquid sample material (36) from the interior of the housing (12) and to let odour escape therethrough, thereby retaining the sample substance (36) within the internal cavity (14) when the closure (28) is in a fully open condition, whilst permitting escape of odour from the sample (36) via the opening (24),
and **in that** the cap (28) is connected to the housing (12) by a flexible adjoining material (30) such as an arm, hinge or strand of material.

2. A tool (10) as claimed in Claim 1, wherein the housing sections (16,18,20) have a hollow interior and are joined together at a peripheral interface having a width that is greater than the width of the opening (24).

3. A tool (10) as claimed in Claim 1 or 2, wherein the housing sections (16,18,20) are releasably attached together by a screw thread (22).

4. A tool (10) as claimed in any preceding claim, wherein the at least one opening (24) is provided with the restriction (26) for preventing the sample substance (36) from leaving the internal cavity (14).

5. A tool (10) as claimed in Claim 4, wherein the restriction (26) comprises any or any combination of an obstructing member spanning the opening, a one-way valve, and/or a breathable fabric.

6. A tool (10) as claimed in any preceding claim, further comprising a collar (31) arranged for attachment to the housing (12) about the opening (24), the closure (28) being attached to the collar (31).

7. A tool (10) as claimed in claim 6, wherein the collar (31) comprises the restriction (26) for preventing the sample substance (36) from leaving the internal cavity (14) when the closure (28) is in the fully open condition.

8. A tool (10) as claimed in any preceding claim, wherein the tool (10) is provided with means (32) for releasably attaching the tool (10) to a support surface in use.

9. A tool (10) as claimed in Claim 8, wherein the means (32) for releasably attaching the tool to a surface is a magnet.

10. A tool (10) as claimed in any preceding claim, wherein the internal cavity (14) is provided with one or more structures for securing the sample substance (36) in place.

11. A canine odour detection training kit (80), the kit (80) comprising a plurality of canine odour detection training tools (10) as claimed in any previous claim, wherein each tool (10) is provided with a sample substance (36) and the kit further comprises a storage case (82) having a plurality of individually sealable receptacles (94) for each of the tools (10).

12. A kit (80) as claimed in Claim 11, wherein the storage case (82) has a plurality of internal compartments (92) and each of the internal compartments (92) is provided with a sealable receptacle (94).

13. A kit (80) as claimed in Claim 11 or 12, wherein the sealable receptacles (94) are made of glass and the storage case (82) is provided with a foam interior (90).

14. A tool (10) or kit (80) according to any preceding claim, further comprising a sample substance (36) comprising a body infused with an odour-emitting material.

## Patentansprüche

1. Werkzeug (10) für das Geruchserkennungstraining von Hunden, das Werkzeug (10) umfassend:
ein Gehäuse (12) mit einem inneren Hohlraum (14), der angepasst ist, um eine geruchsverströmende Probensubstanz (36) und mindestens eine Öffnung (24) aufzunehmen; und
mindestens einen lösbaren Verschluss (28), der selektiv Gerüche daran hindert, aus der mindestens einen Öffnung (24) auszuströmen,
wobei das Gehäuse (12) eine Vielzahl von Gehäuseabschnitten (16, 18, 20) umfasst, die so angeordnet sind, dass die geruchsverströmende Probe (36) in Verwendung dazwischen gefangen ist, wobei die Vielzahl von Gehäuseabschnitten (16, 18, 20) lösbar aneinander befestigt sind, und der Verschluss (28) eine Schnellverschluss-Kappe ist,
**dadurch gekennzeichnet, dass** das Werkzeug (10) eine zur Öffnung (24) benachbarte Verengung (26) umfasst, um das Austreten von festem/flüssigem Probenmaterial (36) aus dem Inneren des Gehäuses (12) zu verhindern, und einen Geruch dadurch austreten zu lassen, wodurch die Probensubstanz (36) im inneren Hohlraum (14) gehalten wird, wenn der Verschluss (28) in einem vollständig offenen Zustand ist, während das Austreten von Geruch von der Probe (36) über die Öffnung (24) ermöglicht wird,
und dadurch, dass der Verschluss (28) mit dem Gehäuse (12) durch ein flexibles angrenzendes Material (30), wie zum Beispiel einem Arm, einem Scharnier oder einem Materialstrang, verbunden ist.

2. Werkzeug (10) nach Anspruch 1, wobei die Gehäuseabschnitte (16, 18, 20) einen hohlen Innenraum aufweisen und an einer umlaufenden Grenzfläche miteinander verbunden sind, die eine Breite aufweist, die größer als die Breite der Öffnung (24) ist.

3. Werkzeug (10) nach Anspruch 1 oder 2, wobei die Gehäuseabschnitte (16, 18, 20) durch ein Schraubengewinde (22) lösbar aneinander befestigt sind.

4. Werkzeug (10) nach einem vorhergehenden Anspruch, wobei die mindestens eine Öffnung (24) mit der Verengung (26) bereitgestellt ist, um zu verhindern, dass die Probensubstanz (36) den inneren Hohlraum (14) verlässt.

5. Werkzeug (10) nach Anspruch 4, wobei die Verengung (26) eines oder eine Kombination von einem die Öffnung überspannenden Blockierelement, einem Rückschlagventil, und/oder einem atmungsaktiven Gewebe umfasst.

6. Werkzeug (10) nach einem vorhergehenden Anspruch, ferner umfassend eine Abdeckrosette (31), die angeordnet ist, um um die Öffnung (24) am Gehäuse (12) befestigt zu werden, wobei der Verschluss (28) an der Abdeckrosette (31) befestigt ist.

7. Werkzeug (10) nach Anspruch 6, wobei die Abdeckrosette (31) die Verengung (26) umfasst, die verhindert, dass die Probensubstanz (36) den inneren Hohlraum (14) verlässt, wenn der Verschluss (28) im vollständig offenen Zustand ist.

8. Werkzeug (10) nach einem vorhergehenden Anspruch, wobei das Werkzeug (10) mit einem Mittel (32) zum lösbaren Befestigen des Werkzeugs (10) an eine Auflagefläche in Verwendung bereitgestellt ist.

9. Werkzeug (10) nach Anspruch 8, wobei das Mittel (32) zum lösbaren Befestigen des Werkzeugs an einer Fläche ein Magnet ist.

10. Werkzeug (10) nach einem vorhergehenden Anspruch, wobei der innere Hohlraum (14) mit einer oder mehreren Strukturen bereitgestellt ist, um die Probensubstanz (36) ortsfest zu sichern.

11. Set (80) für das Geruchserkennungstraining für Hunde, das Set (80) umfassend eine Vielzahl von Werkzeugen (10) für das Geruchserkennungstraining von Hunden nach einem vorhergehenden Anspruch, wobei jedes Werkzeug (10) mit einer Probensubstanz (36) bereitgestellt ist, und das Set ferner einen Aufbewahrungsbehälter (82) mit einer Vielzahl von individuell verschließbaren Gefäßen (94) für jedes der Werkzeuge (10) umfasst.

12. Set (80) nach Anspruch 11, wobei der Aufbewahrungsbehälter (82) eine Vielzahl von inneren Fächern (92) aufweist und jedes der inneren Fächer (92) mit einem verschließbaren Gefäß (94) bereitgestellt ist.

13. Set (80) nach Anspruch 11 oder 12, wobei die verschließbaren Gefäße (94) aus Glas hergestellt sind und der Aufbewahrungsbehälter (82) mit einem Schaumstoff-Innenraum (90) bereitgestellt ist.

14. Werkzeug (10) oder Set (80) nach einem vorhergehenden Anspruch, ferner umfassend eine Probensubstanz (36), umfassend einen Körper, dem ein geruchsverströmendes Material zugesetzt wurde.

## Revendications

1. Outil d'apprentissage canin de détection d'odeur (10), ledit outil (10) comprenant :
un logement (12) possédant une cavité interne (14) adaptée pour contenir un substance échantillon odoriférante (36) et au moins une ouverture (24) ; et
au moins une fermeture libérable (28) qui empêche sélectivement des odeurs d'être émises depuis la au moins une ouverture (24), ledit logement (12) comprenant une pluralité de sections de logement (16, 18, 20) agencées de sorte que l'échantillon odoriférant (36) soit piégé entre elles lors de l'utilisation, ladite pluralité de sections de logement (16, 18, 20) étant fixées de manière libérable ensemble et ladite fermeture (28) étant un bouchon à libération rapide, **caractérisé en ce que** l'outil (10) comprend une restriction (26) adjacente à l'ouverture (24) pour empêcher la matière échantillon de solide/lidquide (36) de s'échapper de l'intérieur du logement (12) et de laisser une odeur s'échapper de celui-ci, conservant ainsi la substance échantillon (36) dans la cavité interne (14) lorsque la fermeture (28) est dans un état complètement ouvert, tout en permettant à l'odeur de s'échapper de l'échantillon (36) par l'intermédiaire de l'ouverture (24) et **en ce que** le bouchon (28) est relié au logement (12) par un matériau souple attenant (30) tel qu'un bras, une charnière ou un brin de matériau.

2. Outil (10) selon la revendication 1, lesdites sections de logement (16, 18, 20) possédant un intérieur creux et étant jointes ensemble à une interface périphérique présentant une largeur supérieure à la largeur de l'ouverture (24).

3. Outil (10) selon la revendication 1 ou 2, lesdites sections de logement (16, 18, 20) étant fixées de manière libérable ensemble par un filetage de vis (22).

4. Outil (10) selon l'une quelconque des revendications précédentes, ladite au moins une ouverture (24) étant dotée de la restriction (26) pour empêcher la substance d'échantillon (36) de quitter la cavité interne (14).

5. Outil (10) selon la revendication 4, ladite restriction (26) comprenant l'un quelconque ou une combinaison quelconque d'un élément d'obstruction couvrant l'ouverture, d'une soupape unidirectionnelle et/ou d'un tissu respirant.

6. Outil (10) selon l'une quelconque des revendications précédentes, comprenant en outre un collier (31) agencé pour se fixer au logement (12) autour de l'ouverture (24), ladite fermeture (28) étant fixée au collier (31).

7. Outil (10) selon la revendication 6, ledit collier (31) comprenant la restriction (26) pour empêcher la substance échantillon (36) de quitter la cavité interne (14) lorsque la fermeture (28) est dans un état complètement ouvert.

8. Outil (10) selon l'une quelconque des revendications précédentes, ledit outil (10) étant doté d'un moyen (32) destiné à fixer de façon libérable l'outil (10) à une surface de support lors de l'utilisation.

9. Outil (10) selon la revendication 8, ledit moyen (32) destiné à fixer de façon libérable l'outil à une surface étant un aimant.

10. Outil (10) selon l'une quelconque des revendications précédentes, ladite cavité interne (14) étant dotée d'une ou plusieurs structures permettant de fixer solidement la substance d'échantillon (36) en place.

11. Kit d'apprentissage canin de détection d'odeur (80), ledit kit (80) comprenant une pluralité d'outils d'apprentissage canin de détection d'odeur (10) selon l'une quelconque des revendications précédentes, chaque outil (10) étant doté d'une substance échantillon (36) et ledit kit comprenant en outre un boîtier de rangement (82) possédant une pluralité de récipients refermable individuellement de façon hermétique (94) pour chacun des outils (10).

12. Kit (80) selon la revendication 11, ledit boîtier de rangement (82) possédant une pluralité de compartiments internes (92) et chacun des compartiments internes (92) étant doté d'un récipient refermable de façon hermétique (94).

13. Kit (80) selon la revendication 11 ou 12, lesdits récipients refermable de façon hermétique (94) étant constitués de verre et ledit boîtier de rangement (82) étant doté d'un intérieur en mousse (90).

14. Outil (10) ou kit (80) selon l'une quelconque des revendications précédentes, comprenant en outre une substance échantillon (36) comprenant un corps imprégné d'une matière odoriférante.
